# EUROPÄISCHE PATENTSCHRIFT

(11) **EP 1 615 314 B1**
(45) Veröffentlichungstag und Bekanntmachung des Hinweises auf die Patenterteilung: **07.04.2010**
(21) Anmeldenummer: 05013792.6
(22) Anmeldetag: 25.06.2005
(51) Int. Cl.: H02J 13/00

(54) **Schaltung zur Halbwellenerkennung einer 230-V-Wechselspannung**
Circuit for half wave recognition of a 230V AC voltage
Circuit pour la reconnaissance des demi-ondes d'une tension 230V courant alternatif

(30) Priorität: 08.07.2004 DE 102004033070
(43) Veröffentlichungstag der Anmeldung: 11.01.2006
(73) Patentinhaber: Theben AG, 72401 Haigerloch (DE)
(72) Erfinder: Lohmüller, Peter, Dipl.-Ing. (FH), 72414 Rengendingen/Höpfendorf (DE)
(74) Vertreter: Neymeyer, Franz

(56) Entgegenhaltungen:
- US-A- 4 310 829
- LINZ S ET AL: "RUNDSTEUERSENDER MIT LEISTUNGSTRANSISTOREN" ELEKTROTECHNISCHE ZEITSCHRIFT - ETZ, VDE VERLAG GMBH, BERLIN, DE, Bd. 112, Nr. 22, 1. November 1991 (1991-11-01), Seiten 1228-1231, XP000272828 ISSN: 0948-7387

## Beschreibung

Die Erfindung betrifft eine Schaltungsanordnung zur Auswertung von positiven und negativen Netzhalbwellen zwecks Erkennung des Schaltzustandes eines Schalters unter Verwendung zweier antiparallel geschalteter, die Netzhalbwellen detektierenden Diodenschaltungen, die mit einem Widerstand in Reihe geschaltet sind, wobei die Ausgangssignale der die Netzhalbwellen detektierenden Diodenschaltungen den Eingängen einer Auswerteschaltung getrennt zuführbar sind.

Bei derzeit bekannten Hausinstallationen in 230-V-Technik werden für die Energieversorgung von Verbrauchern üblicherweise Kabeltypen mit mehreren Adern verwendet. Gebräuchlich sind hierbei 5-, 7- oder auch 10-adrige Kabel, welche in der Regel von einem Schaltschrank über einen Schalter zum entsprechenden Verbraucher führen. Weiter ist auch bekannt, in solchen Schaltschränken diverse, unterschiedliche Schaltvorgänge bewirkende Steuereinrichtungen vorzusehen, welche wiederum durch in verschiedenen Räumen angeordnete Schalter aktivierbar sind. Zur Ansteuerung einer solchen Steuereinrichtung ist es bekannt, sowohl die positive als auch die negative Netzhalbwelle des 230-V-Stromnetzes zu verwenden, um je nach Anliegen der einen oder der anderen oder auch beider Netzhalbwellen unterschiedliche Schaltvorgänge in der Steuerung zu bewirken. Dies macht es erforderlich, den Schaltzustand des entsprechenden, die negative, positive oder auch die Vollwelle durchschaltenden Schalters erkennen zu können.

Aus der DE 93 06 753 U1 ist eine Schaltungsanordnung bekannt, bei welcher ein getrenntes oder gemeinsames Ein-/Ausschalten von zwei Netzspannungsleistungskreisen eines elektronischen Doppelrelais durch die Auswertung der Wechselspannungshalbwellen einer als Steuerspannung dienenden Wechselniederspannung von 12 V erfolgt. Dazu werden zwei antiparallel geschaltete, die Netzhalbwellen detektierende Diodenschaltungen, die mit einem Widerstand in Reihe geschaltet sind verwendet, wobei die Ausgangssignale der die Halbwellen detektierenden Diodenschaltungen den Eingängen der Auswerteschaltungen getrennt zuführbar sind.

Hierbei tritt das Problem auf, dass in einem mehradrigen Kabel, bei welchem die einzelnen Leitungen äußerst dicht nebeneinander liegen, kapazitive Verkopplungen zwischen den einzelnen Leitungen des Kabels wirken, welche sich bei einer Auswerteschaltung als äußerst problematisch erweisen. So werden insbesondere bei geöffnetem Schalter von den benachbarten Leitungen fremde Signale und Ströme in die "Schalterleitung" eingekoppelt. Dabei hat sich herausgestellt, dass bei mehradrigen Kabeln Kapazitäten von mehreren pF bis nF wirken. Dabei ist die Kapazitätsgröße proportional zur jeweils verwendeten Kabellänge. Dies bedeutet wiederum, dass bei Kabellängen von beispielsweise 100 m und einem verwendeten Kabel beispielsweise vom Typ NYM bis zu 25 nF wirken können. Bei dieser Kabellänge fließt an den Eingängen einer anzusteuernden Steuereinrichtung, bei nicht gedrücktem Schalter ein kapazitiver Strom in der Größenordnung von 2,5 mA AC.

Diese unerwünschte kapazitive Stromkopplung macht eine schaltungstechnische Auswertung schwierig, da zusätzlich eine positive und negative Halbwellenerkennung bei gedrücktem Schalter erfolgen muß. D.h. letztendlich, dass aufgrund dieser kapazitiven Einkopplungen auch bei nicht gedrücktem Schalter an der Steuereinrichtung bei großen Kabellängen ein entsprechendes Schaltsignal anliegt, obwohl der Schalter geöffnet ist.

So ist es beim der Schaltungsanordnung der DE 93 06 753 U1 notwendig die Steuerleitungen, welche die Niederwechselspannung führen von den die Netzspannung führenden Leitungen räumlich zu trennen und in einem separaten Kabelkanal zu verlegen.

Weiter ist es beispielsweise auch aus der DE 296 09 453 U1 bekannt, bei einem Ferntastsystem nicht die in einer Gebäudeinstallation üblichen 230 V als Steuerspannung zu verwenden, sondern auf eine 24 V-Kleinspannung auszuweichen. Bei diesem bekannten System wird eine solche eigene 24 V-Kleinspannung in separaten, von den die Netzspannung von 230 V führenden Kabeln getrennte Steuerleitungen zu den entsprechenden Schaltern geführt. Da diese Leitungen nur eine 24 V-Kleinspannung führen und auch räumlich von den 230 V-Leitungen der eigentlichen Hausinstallation getrennt sind, tritt hier kein Problem mit kapazitiven Stromkopplungen auf. Dementsprechend können hier auch äußerst lange "Steuerleitungen" eingesetzt werden.

Wird bei 230 V-Installationen die 230 V-Netzspannung zur Steuerung einer Steuereinrichtung verwendet, so ist es bekannt, die Leitungslängen der Steuerleitungen auf 5 m zu begrenzen, um die kapazitiven Einkopplungen sehr klein halten zu können. Damit treten bei solchen Installationen mit "kurzen" Steuerleitungen in der Regel keine Probleme auf. Das Dokument US 4 310 829 offenbart weiterhin eine Schaltungsanordnung zur Auswertung von positiven und negativen Netzhalbwellen zwecks Erkennung des Schaltzustandes eines Schalters unter Verwendung zweier antiparallel geschalteter Diodenschaltungen und eines parallel zu den Diodenschaltungen Spannungsteilers.

Der Erfindung liegt die Aufgabe zugrunde, eine Schaltungsanordnung anzugeben, mit welcher es möglich ist, einerseits eine Halbwellendetektion einer Wechselspannung durchzuführen und gleichzeitig die Schalterstellung eines Schalters zu detektieren, um nachfolgende Schaltvorgänge z.B. eine bestimmte Art einer Beleuchtungssteuerung zu steuern.

Erfindungsgemäß wird die Aufgabe zusammen mit den Merkmalen des Oberbegriffes dadurch gelöst, dass ein Spannungsteiler in Form einer parallel zu den Diodenschaltungen geschalteten auf einen maximalen Stromfluß ausgelegten Strombegrenzerschaltung vorgesehen ist, welche aus einem ersten Feldeffekt-Transistor besteht, welcher in Reihe mit einem Widerstand und einem zweiten Feldeffekt-Transistor geschaltet ist und, dass die Feldeffekt-Transistoren als selbstleitende Bauteile ausgebildet sind.

Weitere vorteilhafte Ausgestaltungen sind den Unteransprüchen entnehmbar.

So ist gemäß Anspruch 2 vorsehen, dass die Diodenschaltungen aus zwei antiparallel zueinander und in Reihe mit einem Vorwiderstand geschalteten Optokopplern gebildet sind. Durch diese Ausgestaltung wird eine Potenzialtrennung zwischen den "Eingängen" und den Ausgängen der Schaltung erreicht.

Gemäß Anspruch 3 kann vorgesehen sein, dass die Diodenschaltungen aus zwei antiparallel geschalteten Dioden gebildet sind, welche jeweils mit einem Widerstand in Reihe geschaltet sind und, dass die Diodenschaltungen jeweils einen Transistor zur Erzeugung eines Ausgangssignals ansteuern.

Anhand der Zeichnung wird nachfolgend die Erfindung näher erläutert. Es zeigt:
- Fig. 1: eine erfindungsgemäße Schaltung, bei welcher die Diodenschaltungen aus zwei Optokopplern bestehen;
- Fig. 2: ein Schaltungsbeispiel, bei welchem die Diodenschaltungen aus zwei Gleichrichterdioden bestehen, welche mit zwei Transistoren gekoppelt sind.

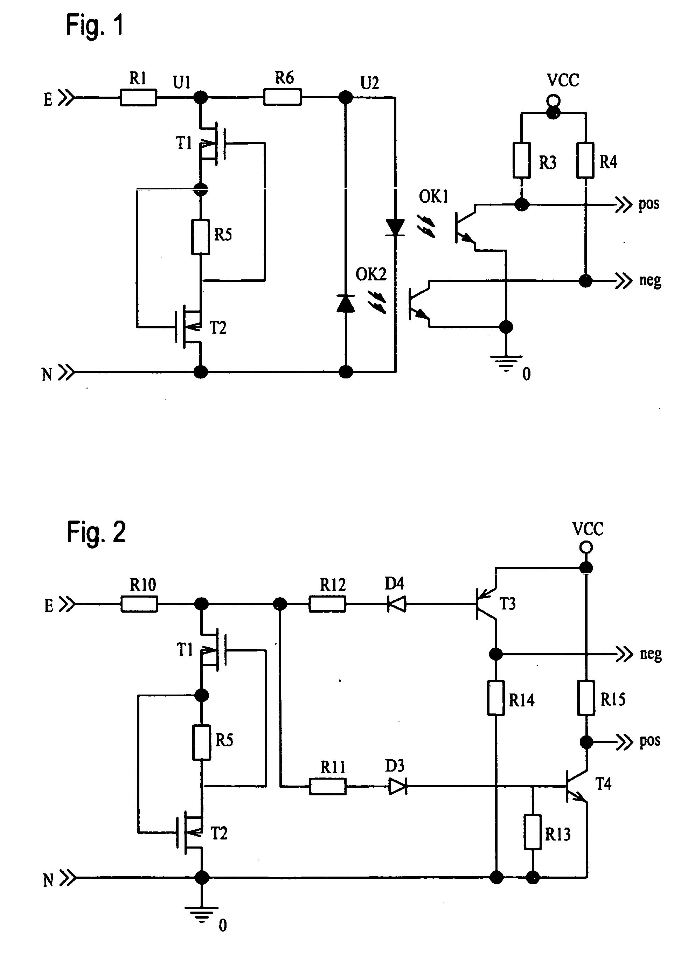

Beim Ausführungsbeispiel gemäß Fig. 1 ermöglicht die Schaltung eine definierte Strombegrenzung von beispielsweise 2,5 oder 2 mA mit nur insgesamt vier Bauelementen R1, R5, T1 und T2 in sehr kleiner Bauform. Des weiteren sind hier zwei Feldeffekt-Transistoren T1 und T2 vorgesehen, welche als selbstleitende Bauteile ausgebildet sind. Diese Feldeffekt-Transistoren T1 und T2 können durch eine negative Ansteuerspannung minus V_{GS} in einen nicht leitenden Zustand gebracht werden. In diesem nicht leitenden Zustand steht die volle Eingangsspannung E in Reihe mit dem Widerstand R1 als Spannung U1 an den Feldeffekt-Transistoren T1 und T2 an.

Dementsprechend sind diese beiden Feldeffekt-Transistoren T1 und T2 für diese hohe Netzspannung von 230 V ausgelegt. Die Größe des erforderlichen Begrenzerstromes ist von der Größe des Widerstandes R5 abhängig. Wird ein Schalter betätigt, so würde sich ohne die aus den Feldeffekt-Transistoren T1 und T2 sowie dem Widerstand R5 bestehende Strombegrenzerschaltung auf einen wesentlich größeren Strom einstellen. Durch die beiden Feldeffekt-Transistoren T1 und T2 wird der komplette Leistungsumsatz zusammen mit dem Widerstand R1 bewältigt. Dabei begrenzt der Feldeffekt-Transistor T1 die positiven Netzhalbwellen und der Feldeffekt-Transistor T2 die negativen Netzhalbwellen.

Sehr vorteilhaft bei dieser Schaltung ist die äußerst geringe Verlustleistung. Über den Widerstand R5 stellen sich ca. -2V V_{GS} bei etwa 2,5 mA Strom ein, welcher eine Verlustleistung von nur 5 mW hervorruft und eine dichte Bauteilplazierung in einem kleinen Gehäuse erlaubt. Am Widerstand R1 werden etwa 300 mW über einen sog. SMD-Widerstand umgesetzt.

Die beiden Feldeffekt-Transistoren T1 und T2 haben jeweils etwa 130 mW umzusetzen. Somit ist die Gesamtverlustleistung der dargestellten, erfindungsgemäßen Schaltung sehr klein und kann mit sehr Platz sparenden SMD-Bauteilen realisiert werden. Bei solchen SMD-Bauteilen handelt es sich um elektronische Bauteile, welche drahtlos auf einer Platine plazierbar sind.

Aus der Darstellung der Fig. 1 geht hervor, dass die erfindungsgemäße Schaltung mit sog. selbstleitenden Feldeffekt-Transistoren T1 und T2 ausgelegt ist. Diese sind ab ca. plus 25°C einem Temperaturdrift von lediglich 0,2% K unterlegen.

Bei der Auslegung der Strombegrenzung kann diese thermische Verschiebung berücksichtigt werden. Der Übergang vom "Nichtbegrenzerbereich" in den "Begrenzerbereich" wird vom Verstärkungsfaktor der Feldeffekt-Transistoren bestimmt und ist sehr steil. Die Spannung U1 und somit die Optokopplerspannung U2 steigt sehr schnell von LOW auf HIGH und ist somit leicht auswertbar.

Der Vorteil dieser Schaltung liegt darin, dass die normalerweise bei Optokopplern, wie sie hier verwendet werden, vorhandene Streuung des Übertragungsfaktors von 80% bis 180% nicht mehr zum tragen kommt. Die dargestellte Schaltung ist sehr stabil und braucht durch ihr Tiefpassverhalten keine weiteren Entstörbauelemente.

Fig. 2 zeigt eine Schaltungsvariante ohne Potenzialtrennung, welche beim Ausführungsbeispiel der Fig. 1 durch die Verwendung der beiden Optokoppler OK1, OK2 realisiert ist. Ist keine Potenzialtrennung erforderlich zwischen den "Eingängen" E und N zu den Ausgängen pos und neg, so kann die Schaltung gemäß der dargestellten Fig. 2 ebenfalls dieselbe Aufgabe erfüllen, nämlich eine kapazitive Stromeinkopplung, wie sie beispielsweise bei einer Kabellänge von 100 m gegeben ist, zu unterdrücken.

Im Vergleich zum Ausführungsbeispiel der Fig. 1 ist der Widerstand R6 mit den Optokopplern OK1, OK2 durch den Widerstand R11, die Diode D3 sowie den Widerstand R12 und die Diode D4 ersetzt.

Fällt bei dieser Schaltung bei der negativen Netzhalbwelle die Spannung am Widerstand R12 auf kleiner Vcc, so wird der nachgeschaltete Transistor T3 leitend und der negative Ausgang neg steigt an. Steigt bei der positiven Halbwelle die Spannung am Widerstand R11 auf einen Wert größer die Basisspannung am Transistor T4 an, so wird der Transistor T4 leitend und der Ausgang pos fällt ab.

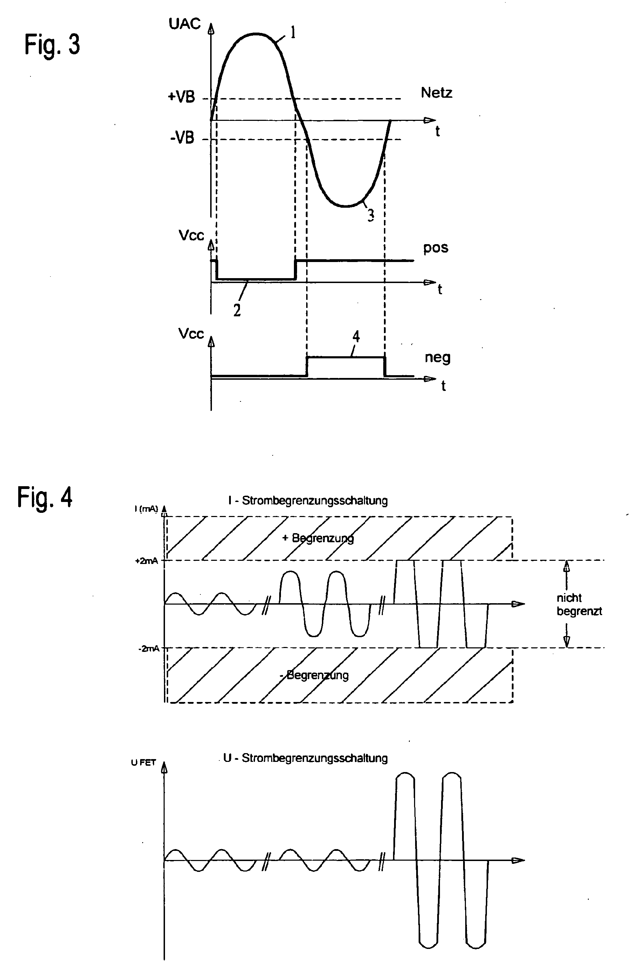

Hierzu zeigt Fig. 3 den Spannungsverlauf sowie die Signale pos und neg in ihrem zeitlichen Verlauf. Aus dieser Darstellung ist erkennbar, dass bei Überschreiten der positiven Netzhalbwelle 1 von +VB am Ausgang pos ein Rechtecksignal 2 anliegt und bei Unterschreiten der negativen Halbwelle 3 von -VB am Ausgang neg ein negatives Rechtecksignal 4 anliegt.

Weiter zeigt Fig. 4 den Stromverlauf sowie den Spannungsverlauf an der Strombegrenzerschaltung, welche aus den beiden Feldeffekt-Transistoren T1 und T2 und dem Widerstand R5 gemäß der Zeichnungsfiguren 1 und 2 zwischen dem die Phase führenden Eingang E und dem Nullleiter N eingekoppelt ist.

Es ist erkennbar, dass beim vorliegenden Ausführungsbeispiel der Strom auf +/- 2 mA begrenzt ist. Bei geschlossenem Schalter würde der Strom normalerweise über diese +/- 2 mA ansteigen, was durch die Strombegrenzerschaltung verhindert wird, wie dies in der rechten Diagrammhälfte der Fig. 4 für den Strom I erkennbar ist. Dies bedeutet wiederum, dass bei geöffnetem Schalter und somit kleinen anliegenden Strömen, keine Strombegrenzung stattfindet und dementsprechend für diesen Schaltzustand an der Strombegrenzerschaltung eine Spannung UFET anliegt, welche von den beiden Optokopplern OK1 und OK2 nicht detektierbar ist. Im Falle der Strombegrenzung im rechten Teil des Diagramms zu I steigt hingegen die Spannung U1 an der Strombegrenzerschaltung aufgrund der Strombegrenzung deutlich an, so dass diese von den beiden Optokopplern OK1 und OK2 detektierbar ist. Dabei entsteht ein Signalverlauf, wie dieser in Fig. 3 dargestellt ist.

Somit sind durch die erfindungsgemäße Schaltung gemäß der Fig. 1 (mit Potenzialtrennung) und Fig. 2 (ohne Potenzialtrennung) kapazitive Stromeinkopplungen, wie diese bei größeren Kabellängen von beispielsweise 100 m auftreten, unterdrückt, so dass mit diesen erfindungsgemäßen Schaltungen die Schalterstellung zur Ansteuerung einer Steuerung eindeutig detektierbar ist und insbesondere auch eine Netzhalbwellenerkennung der positive und negativen Netzhalbwelle einwandfrei durchführbar ist.

Die Ausgangssignale pos und neg sind getrennt einer in der Zeichnung nicht näher dargestellten Auswerteschaltung, z.B. in Form eines Mikroprozessors, zuführbar. N stellt in den Zeichnungen den "Nullleiter" dar, während E die von einem Schalter (nicht dargestellt) kommende, bei geschlossenem Schalter die Vollwelle der Netzspannung oder die positive oder negative Netzhalbwelle der Netzspannung führende Eingangsleitung darstellt.

## Patentansprüche

1. Schaltungsanordnung zur Auswertung von positiven und negativen Netzhalbwellen zwecks Erkennung des Schaltzustandes eines Schalters unter Verwendung zweier antiparallel geschalteter, Diodenschaltungen (R6, OK1, OK2; R11, D3, R12, D4), die mit einem Widerstand (R1, R10) in Reihe geschaltet sind, wobei die Ausgangssignale (neg, pos) der Diodenschaltungen (R6, OK1, OK2; R11, D3, R12, D4) den Eingängen einer Auswerteschaltung getrennt zuführbar sind,
wobei
ein Spannungsteiler in Form einer parallel zu den Diodenschaltungen (R6, OK1, OK2; R11, D3, R12, D4) geschalteten auf einen maximalen Stromfluß ausgelegten Strombegrenzerschaltung vorgesehen ist, welche aus einem ersten Feldeffekt-Transistor (T1) besteht, welcher in Reihe mit einem zweiten Feldeffekt-Transistor (T2) geschaltet ist **dadurch gekennzeichnet, dass** die Diodenschaltungen zum Detektieren von Netzhalbwellen dienen, dass der erste Feldeffekt-Transistor in Reihe mit einem Widerstand (R5) geschaltet ist und,
dass die Feldeffekt-Transistoren (T1, T2) als selbstleitende Bauteile ausgebildet sind.

2. Schaltungsanordnung nach Anspruch 1, **dadurch gekennzeichnet, dass** die Diodenschaltungen aus zwei antiparallel zueinander und in Reihe mit einem Vorwiderstand (R6) geschalteten Optokopplern (OK1, OK2) gebildet sind.

3. Schaltungsanordnung nach Anspruch 1, **dadurch gekennzeichnet, dass** die Diodenschaltungen aus zwei antiparallel geschalteten Dioden (D3, D4) gebildet sind, welche jeweils mit einem Widerstand (R11, R12) in Reihe geschaltet sind und,
dass die Diodenschaltungen (R11, D3 und R12, D4) jeweils einen Transistor (T4, T3) zur Erzeugung eines Ausgangssignals (neg, pos) ansteuern.

## Claims

1. Circuit arrangement for evaluating positive and negative network half-waves for the purpose of identifying the switching state of a switch by using two antiparallel connected diode circuits (R6, OK1, OK2; R11, D3, R12, D4), which are connected in series with a resistor (R1, R10), wherein the output signals (neg, pos) of the diode circuits (R6, OK1, OK2; R11, D3, R12, D4) can be supplied separately to the inputs of an evaluation circuit, wherein a voltage divider is provided in the form of a current-limiting circuit connected parallel to the diode circuits (R6, OK1, OK2; R11, D3, R12, D4) and set up for maximum current flow, which current-limiting circuit consists of a first field-effect transistor (T1), which is connected in series with a second field-effect transistor (T2), **characterised in that** the diode circuits are used for detecting network half-waves, **in that** the first field-effect transistor is connected in series with a resistor (R5), and **in that** the field-effect transistors (T1, T2) are designed in the form of self-conducting components.

2. Circuit arrangement according to claim 1, **characterised in that** the diode circuits are formed by two optical couplers (OK1, OK2) connected antiparallel to one another and in series with a series resistor (R6).

3. Circuit arrangement according to claim 1, **characterised in that** the diode circuits are formed by two antiparallel connected diodes (D3, D4), which are connected in series respectively to a resistor (R11, R12), and **in that** the diode circuits (R11, D3 and R12, D4) drive a transistor (T4, T3) respectively for generating an output signal (neg, pos).

## Revendications

1. Circuit pour l'évaluation de demi-ondes positives et négatives d'un réseau en vue de reconnaître l'état de commutation d'un commutateur en utilisant deux circuits à diode (R6, OK1, OK2 ; R11, D3, R12, D4) branchés en antiparallèle qui sont branchés en série avec une résistance (R1, R10), les signaux de sortie (neg, pos) des circuits à diode (R6, OKI, OK2 ; R11, D3, R12, D4) pouvant être amenés aux entrées d'un circuit d'évaluation, un diviseur de tension sous la forme d'un circuit limiteur de courant branché en parallèle sur les circuits à diode (R6, OK1, OK2 ; R11, D3, R12, D4) et dimensionné pour un flux de courant maximal étant prévu, lequel se compose d'un premier transistor à effet de champ (T1) qui est branché en série avec un deuxième transistor à effet de champ (T2),
**caractérisé en ce**
**que** les circuits à diode servent à détecter les demi-ondes du réseau, que le premier transistor à effet de champ est branché en série avec une résistance (R5) et que les transistors à effet de champ (T1, T2) sont réalisés sous la forme de composants autoconducteurs.

2. Circuit selon la revendication 1, **caractérisé en ce que** les circuits à diode sont formés de deux optocoupleurs (OK1, OK2) branchés en antiparallèle l'un sur l'autre et en série avec une résistance série (R6).

3. Circuit selon la revendication 1, **caractérisé en ce que** les circuits à diode sont formés de deux diodes (D3, D4) branchées en antiparallèle qui sont branchées chacune en série avec une résistance (R11, R12) et
que les circuits à diode (R11, D3 et R12, D4) commandent chacun un transistor (T4, T3) pour générer un signal de sortie (neg, pos).
